Europäisches Patentamt

(19) European Patent Office

Office européen des brevets

(11) EP 0 923 235 A1

## (12) EUROPEAN PATENT APPLICATION
published in accordance with Art. 158(3) EPC

(43) Date of publication:
16.06.1999 Bulletin 1999/24

(51) Int. Cl.⁶: $H04N\ 5/262$, $H04N\ 9/75$, $G06T\ 1/00$

(21) Application number: 98921816.9

(22) Date of filing: 26.05.1998

(86) International application number:
PCT/JP98/02307

(87) International publication number:
WO 98/54894 (03.12.1998 Gazette 1998/48)

(84) Designated Contracting States:
DE ES FR GB

(30) Priority: 26.05.1997 JP 13561597

(71) Applicant: Sony Corporation
Tokyo 141-0001 (JP)

(72) Inventor: OHKI, Mitsuharu
Shinagawa-ku Tokyo 141-0001 (JP)

(74) Representative:
Melzer, Wolfgang, Dipl.-Ing. et al
Patentanwälte
Mitscherlich & Partner,
Sonnenstrasse 33
80331 München (DE)

(54) **IMAGE PROCESSING METHOD AND DEVICE, IMAGE PROCESSING PANEL, AND RECORDING MEDIUM**

(57)    In accordance with calibration data collected in a 1st state in which a 1st camera assembled with a 2nd camera and a 3rd camera are unified to construct a stereocamera and calibration data collected in a 2nd state in which the 1st camera is disassembled from the 2nd and 3rd cameras and the three cameras are assembled again to construct a stereocamera, information on the rotary conversion of the stereocamera and information on the translation conversion thereof are calculated and, in accordance with the calculated information, the calibration data on the stereocamera in the 2nd state is calculated.

FIG.11

EP 0 923 235 A1

## Description

Technical Field

This invention relates to a picture processing method and a picture processing apparatus adapted for removing unnecessary portion from original picture to synthesize it with other picture, a picture processing panel for synthesizing character or graphic with picture imaged by image pick-up unit in the state where positions on three-dimension are caused to be in correspondence with each other to output it, and a recording medium on which processing procedure for executing the picture processing is recorded.

Background Art

There has been conventionally known stereo camera system as a three-dimensional position information detecting unit in which two video cameras (hereinafter simply referred to as camera as occasion may demand) or more are used to constitute so-called stereo camera to pick up image of object within three-dimensional space by the respective cameras to obtain position information within the three-dimensional space of the object from two-dimensional picture obtained as the result of the image pick-up.

The detail of the stereo camera system is disclosed in, e.g., Koichiro Deguchi "Geometry for computer vision: 2. Explanation of mechanism of stereo" Information Processing, Vol. 37, no. 7, pp. 662-670, July, 1996, etc.

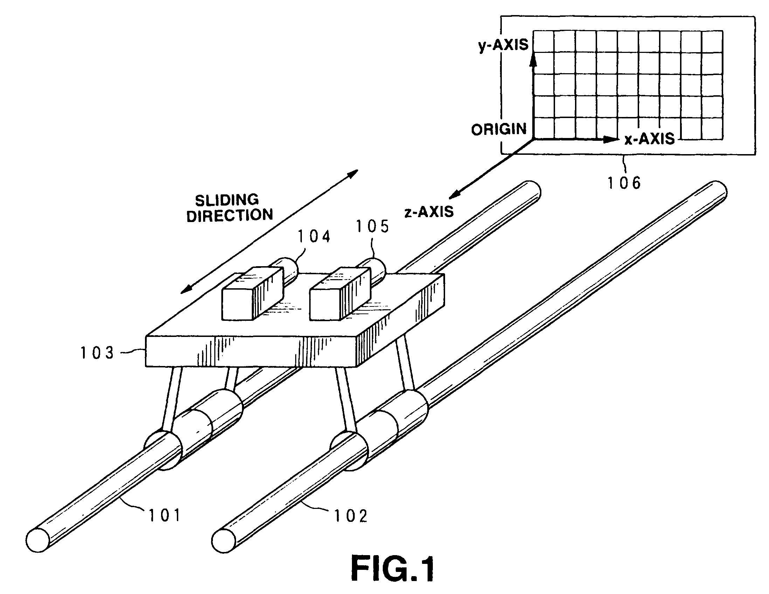

In the stereo camera system, it is possible to specify, from, position information of object projected onto light receiving surface (hereinafter referred to as screen as occasion may demand) of the photo-electric conversion element, e.g., CCD, etc. in respective cameras when image of object from which attempt is made to obtain position information of three-dimensional space is picked up by plural cameras, position information within the three-dimensional space of that object. Accordingly, it is necessary to determine in advance correspondence relationship (position information correspondence relationship) between position information of object existing at a certain position within the three-dimensional space and position information at the position where its object is projected onto screen of the respective cameras when the object is located at that position. This operation for determining position information correspondence relationship is called calibration. Such position information correspondence relationship is determined by the calibration unit. Outline of the calibration unit is shown in FIG. 1.

In FIG. 1, pipes 101 and 102 are included in the same plane within three-dimensional space, and are disposed in such a manner m parallel with each other. A carriage 103 is installed so that it can be smoothly moved along these pipes 101 and 102. In addition, cameras 104 and 105 constituting stereo camera are attached at the carriage 103.

Scale is provided at the pipes 101 and 102 or any one of them, and quantity where the carriage 103 is slid can be measured. A flat plate 106 on which square lattice pattern is described is installed perpendicularly to direction in which the carriage 103 is slid. As shown in FIG. 1, the lateral direction of square lattice is assumed to be x-axis, the longitudinal direction is assumed to be y-axis, and the sliding direction, i.e., the direction perpendicular to the square lattice is assumed to be z-axis. The area of the camera side relative to this flat plate 106 is indicated by $z > O$. Such three dimensional coordinate system composed of x-axis, y-axis and z-axis is defined as world coordinate system.

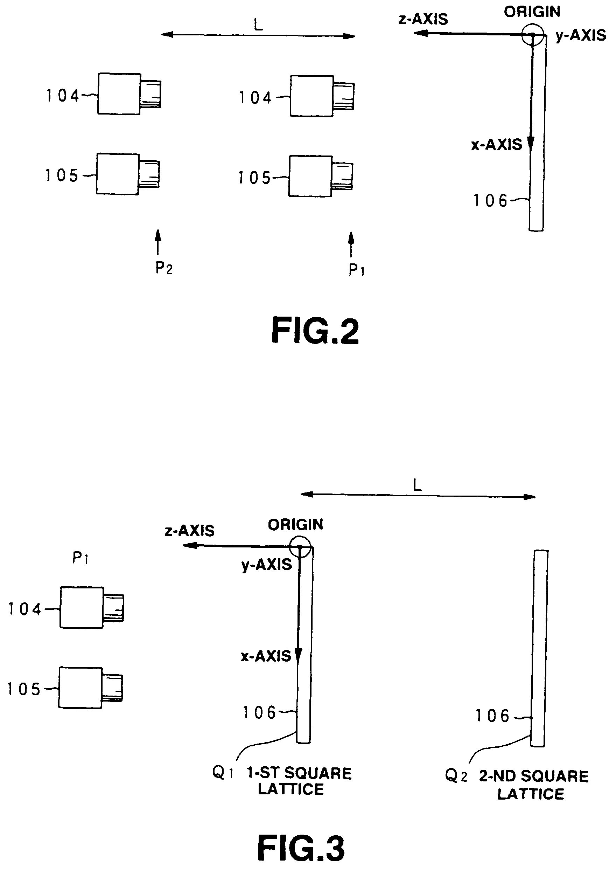

Measurement of calibration is carried out by shifting position of the carriage 103 on which the cameras 104 and 105 are mounted to pick up image of the flat plate 106 from two portions. FIG. 2 is an explanatory view in the case where image of object is taken from two portions, and is a view when the unit of FIG. 1 is viewed from just above.

Initially, the cameras 104 and 105 are fixed at a certain position $P_1$ to pick up image of flat plate 106 so that square lattice is imaged thereafter to move the cameras 104 and 105 by distance L to other position $P_2$ by slide of the carriage 103 to pick up image of the flat plate 106 for a second time. In this example, while the cameras 104 and 105 are slid in a direction away from the flat plate 106 in this FIG. 2, its slide direction may be opposite to each other.

Moreover, two-dimensional picture obtained by sliding the cameras 104 and 105 in this way to pick up image of the flat plate 106 can be also obtained by sliding the flat plate 106 in the state where the cameras 104 and 105 are fixed as shown in FIG. 3.

Namely, even if there is also employed an approach as shown in FIG. 3 to fix cameras 104 and 105 at a certain position $P_1$ to pick up image of the flat plate 106 so that its square lattice can be imaged thereafter to slide the flat plate 106 by distance L in a direction away from the cameras 104 and 105 along the z-axis of the flat plate 106 to pick up image of the flat plate 106 at that position for a second time, similar two-dimensional picture can be obtained.

In this FIG. 3, when left and lower corner of square lattice (first square lattice $Q_1$) described on the flat plate 106 before the flat plate 106 is away by distance L is caused to be origin and is set as origin of the world coordinate, position of (i, j) is set to (i, j, O) in the world coordinates in the first square lattice $Q_1$ of this flat plate 106. In addition, position of (i, j) in the square lattice (second square lattice $Q_2$) of the flat plate 106 after slid by length L is (i, j,-L) in the world coordinates.

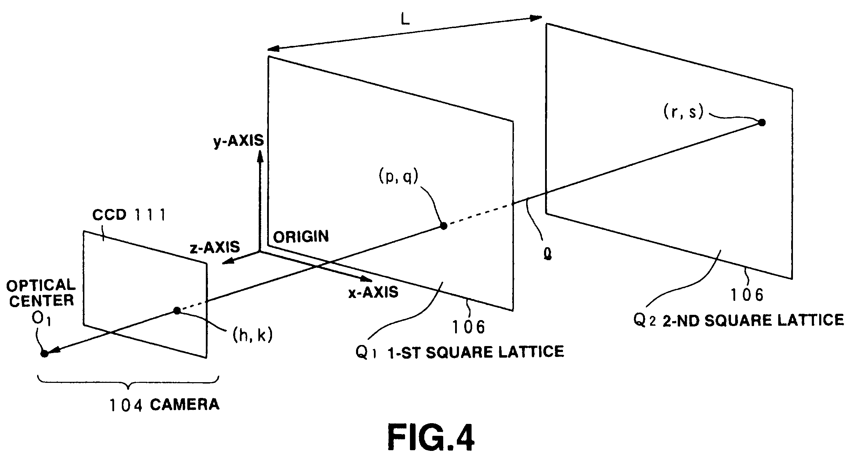

FIG. 4 is a view showing first square lattice $Q_1$ and second square lattice $Q_2$ on the camera 104 and the flat plate 106. The optical center of the camera 104 is $O_1$, and position information of object is projected on the screen serving as light receiving surface of, e.g., CCD 111, etc. For example, coordinate position (p, q) in the first square lattice $Q_1$ is assumed to be imaged at coordinate position (h, k) on the CCD 111, and coordinate position (r, s) in the second square lattice $Q_2$ is assumed to be imaged thereat. In addition, coordinates of portions except for cross points of respective longitudinal lines and lateral lines of respective square lattices can be determined by interpolation.

When this is explained for a second time by using world coordinates, coordinate positions (p, q, O) and (r, s,-L) on the three dimension are imaged at the coordinate position (h, k) on the CCD 111. Namely, when straight line connecting coordinate position (h, k) on the two dimension and coordinate positions (p, q, O) and (r, s,-L) on the three dimension is assumed to be 1, it is seen that points on this line 1 are all imaged at coordinate position (h, k) on the CCD 111.

Accordingly, the line 1 represents correspondence relationship (position information correspondence relationship) between position information of object in the three-dimensional space (coordinates in the world coordinate system here) and position information of two-dimensional picture obtained by picking up image of that object (coordinates in the two-dimensional coordinate system on the CCD 111 here).

This line 1 can be obtained as (x-r)/(p-r) = (y-s)/(q-s) = (z+L)/L

In a manner to determine the line 1, also with respect to other coordinate positions in the two-dimensional coordinate system on the CCD 111, lines as sets of points on the three-dimensional space projected thereonto are determined. Further, similar fact is carried out also with respect to the camera 105.

As stated above, linear lines with respect to cameras 104 and 105 are all determined to thereby complete calibration of the stereo camera system.

In the stereo camera system in which calibration is carried out in this way, position information of object within three-dimensional space can be determined in a manner as described below.

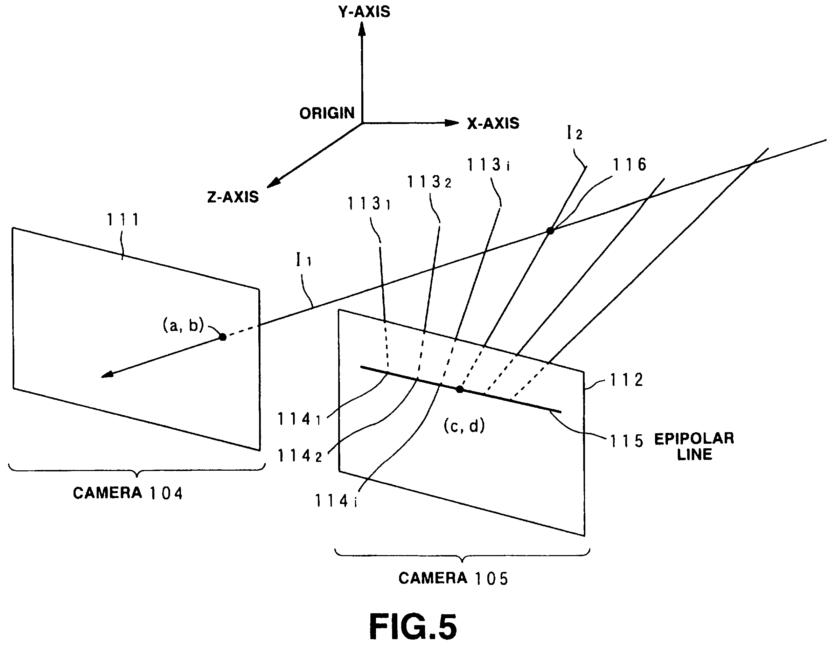

Initially, image of object is taken by stereo camera. Thus, as shown in FIG. 5, for example, object is assumed to be imaged at coordinate position (a, b) of screen (CCD) 111 of the camera 104. Since line $1_1$ in the world coordinate system corresponding to the coordinate position (a, b) is determined in the calibration, object exists on this line $1_1$ in the world coordinate system.

Moreover, lines in the world coordinate system corresponding to respective positions of the screen (CCD) 112 of the camera 105 are also determined in advance in the calibration. Accordingly, it is possible to select lines having points crossing with the line $1_1$ of these lines. Lines thus selected are $113_1$, $113_2$, $113_i$ $\cdot \cdot \cdot$ in the figure.

Point on the screen 112 of the camera 105 corresponding to line $113_1$ is $114_1$. Similarly, point corresponding to $113_2$ is $114_2$ and point corresponding to $113_i$ is $114_i$. Other points are similar to the above. Accordingly, when all these points $114_1$, $114_2$, $114_i$ $\cdot \cdot \cdot$ are gathered, there results line called 115 of FIG. 5. This line 115 is generally called Epipolar Line.

As described above, object imaged at coordinate position (a, b) of screen 111 of the camera 104 exists on any portion of the line $1_1$. Accordingly, that object should have been projected on any portion of the Epipolar Line 115 on the screen 112 of the camera 105. Accordingly, it is sufficient to search projected image of object on the Epipolar line 115. For example, if that projected image exists on the point (c, d) on the Epipolar line 115, line $1_2$ corresponding to the point (c, d) is discriminated. This line $1_2$ is one of lines $113_1$, $113_2$, $113_i$ $\cdot \cdot \cdot$. Later, by determining cross point of line $1_1$ and line $1_2$ by the world coordinate system, position 116 in the three-dimension of object can be known. Namely, it is possible to determine three-dimensional position of object.

At this time, the three-dimensional coordinate system serving as reference is the coordinate system peculiar to position and direction of the stereo camera. If the stereo camera is not moved, the three-dimensional coordinates serving as reference are stationary at all times. However, when the stereo camera is moved during image pick-up, the three-dimensional coordinates are also moved. In this example, the camera 104 and the camera 105 are represented as stereo camera in the following description. Namely, even if the expression "stereo camera" is simply employed, this camera system comprise, e.g., two cameras.

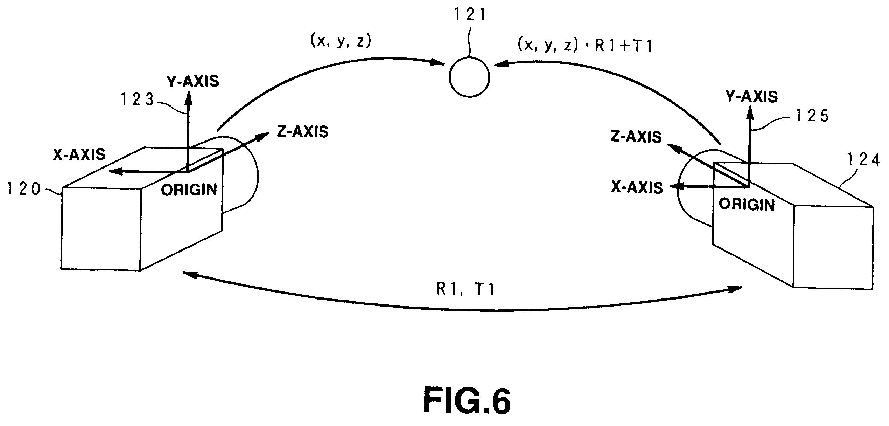

For example, as shown in FIG. 6, position of stationary object 121 determined from stereo camera 120 at initial time is assumed to be (x, y, z) when viewed from coordinate system 123 with the stereo camera 120 at the initial time being as reference. Thereafter, the stereo camera 120 is caused to undergo rotational transform R1 and translational transform T1, and has been stereo camera 124 at the next time.

Thus, position of the stationary object 121 determined by information from the stereo camera 124 at the next tune is expressed as (x, y, z) * R1 + T1 .

The reason thereof is as follows. Since the relationship that the rotational transform R1 and the translational transform T1 are implemented holds in the coordinate system 123 and the coordinate system 125, when position of the same object 121 is measured, it is a matter of course that its positional relationship is the relationship in which the rotational transform R1 and the translational transform T1 are implemented.

Meanwhile, in recent years, in the television station, such an approach has been carried out to pick up picture images at the studio (set) called virtual studio or virtual set to synthesize the picture prepared by CG (Computer Graphic) with the imaged picture to broadcast this synthetic picture.

For example, when an example of the news broadcast is taken, performer is first caused to stand with the background of blue being as background. Image of this performer is picked up (taken) by the stereo camera. One of these stereo cameras is called main camera. CG is synthesized with picture (called original picture) from this main camera to prepare final synthetic picture.

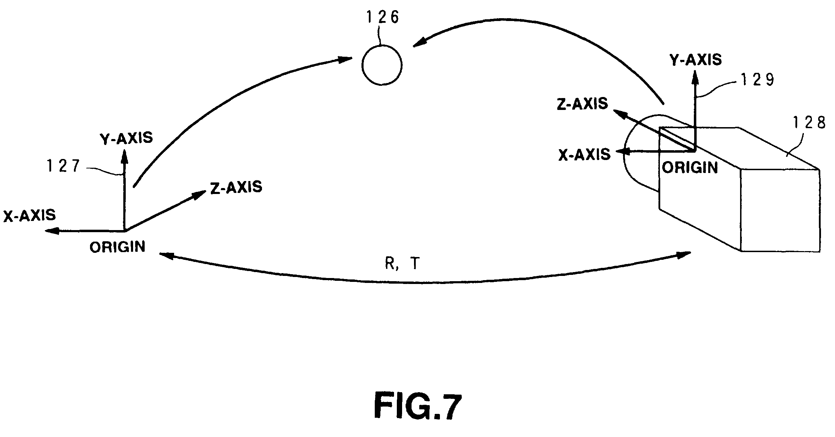

Marker (pattern) which is blue system and is not conspicuous as indicated by reference numeral 126 in FIG. 7 is attached at the background of blue. Position on three-dimension of the marker 126 is measured in advance with the world coordinate system 127 which is a specific absolutely stationary coordinate system being as reference. The marker 126 is not conspicuous, but can be barely recognized by the stereo camera. Accordingly, position of the marker 126 can be measured. Namely, three-dimensional position of the marker 126 when viewed from the coordinate system 129 with the stereo camera 128 at that time being as reference can be recognized (understood). By the above-mentioned measurement, position of the marker 126 with the world coordinate system 127 being as reference and position of the marker 126 with the coordinate system 129 being as reference can be recognized (understood).

When the relationship between the world coordinate system 127 and the coordinate system 129 is assumed to be the relationship in which the rotational transform R and the translational transform T are implemented, the relationship between position of the marker 126 with the world coordinate system 127 being as reference and position of the marker 126 with the coordinate system 129 being as reference also results in the relationship in which the rotational transform R and the translational transform T are implemented. Accordingly, since the position of the marker 126 with the world coordinate system 127 being as reference and position of the marker 126 with the coordinate system 129 being as reference are known in advance, the rotational transform R and the translational transform T can be determined by inverse operation. In practice, plural markers are used to determine rotational transform R and translational transform T by positions of plural markers. Accordingly, in what state (rotational transform R, translational transform T) current position and direction of the stereo camera are taken with the world coordinate system being as reference can be recognized (understood).

Then, artificial background is determined by computer graphic. This artificial background is prepared with the world coordinate system being as reference. For example, white wall is assumed to be present on the surface of z=10. In practice, wall papers having pattern are prepared by CG to synthesize them. In this case, explanation will be given on the assumption that concerned wall paper is the simplest white wall. How the virtual white wall present at z=10 is viewed when image thereof is picked up (taken) from the virtual camera having positional relationship between R and T with respect to the origin of the world coordinate system is calculated. Picture when the virtual white wall is viewed from the virtual position is called "CG background picture".

Moreover, "plate on which content of news, etc. is written" is prepared by CG. This plate is also prepared with the world coordinate system being as reference. For example, a plate of suitable size is assumed to be present at z=8 (camera side relative to the wall). How this plate is viewed when its image is picked up (taken) from the virtual camera having positional relationship between R and T with respect to the origin of the world coordinate system is calculated. Picture when the virtual plate is viewed from this virtual position is called "CG flip picture".

The portion of blue of the original picture imaged on the main camera is removed. Thus, only the background is removed and only projected image of performer is left. This picture is assumed to be called "key extracted picture". In this case, the marker is also removed because it is blue system.

In the "key extracted picture", picture of the previously described "CG flip picture" is inserted into the removed portion. This is assumed to be called first synthetic picture. At the first synthetic picture, performer and projected image of the plate are present, and other portions still remain in removed (extracted) state.

In the first synthetic picture, the previously described "CG background picture" is inserted into the portion which still remain removed. This is assumed to be called second synthetic picture. The second synthetic picture is a picture as if performer and "plate on which content of news, etc, is written" exist with white wall being as background. This second synthetic picture is picture ultimately obtained.

Let now consider the case where performer carries out performance while pointing "plate on which content of news, etc. is written". Since there is no plate in practice, performer must carry out performance while pointing that plate as if it exists at that place. Accordingly, there was the problem that performer is difficult to carry out performance.

Explanation will now be given with reference to the attached drawings. FIGS. 8A, 8B, 8C and 8D are views respectively showing positions of performer within the studio at times t1, t2, t3, t4. FIGS. 9A, 9B, 9C and 9D are respective views of second synthetic picture (synthetic picture ultimately obtained) at times t1, t2, t3, t4. FIGS. 10A, 10B, 10C, 10D are respective views where position of performer within the studio and position of virtual plate prepared by CG are assumed to be viewed from the upper side at times t1, t2, t3, t4. In this case, t1 <t2 <t3 <t4 holds.

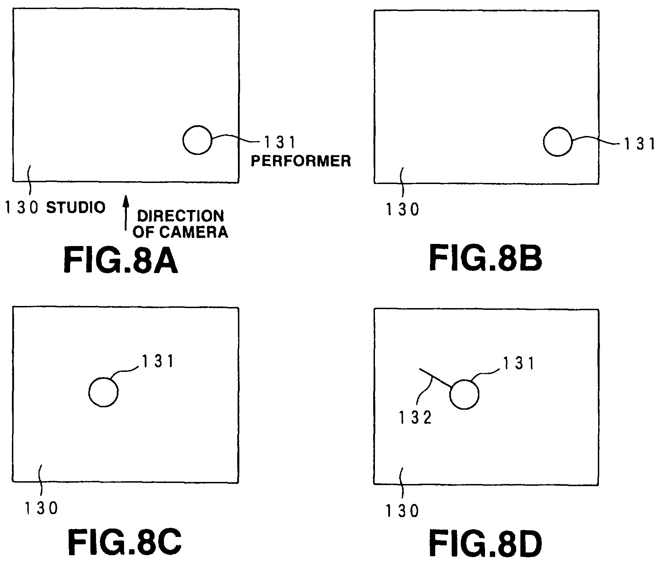

Initially, standing position of performer will be described with reference to FIGS. 8A, 8B, 8C and 8D. In respective figures, the stereo camera picks up image from the lower direction of the figure toward the upper direction thereof At time t1, as shown in FIG. 8A, performer 131 is present at the right end of the studio 130. Also at time t2, performer 131 is present at the right end of the studio 130 as shown in FIG. 8B. At time t3, as shown in FIG. 8C, the performer 131 has been moved to the central portion of the studio 130. At time t4, as shown in FIG. 8D, the performer 131 is present at the central portion of the studio 130 to stretch arm 132 to point air,

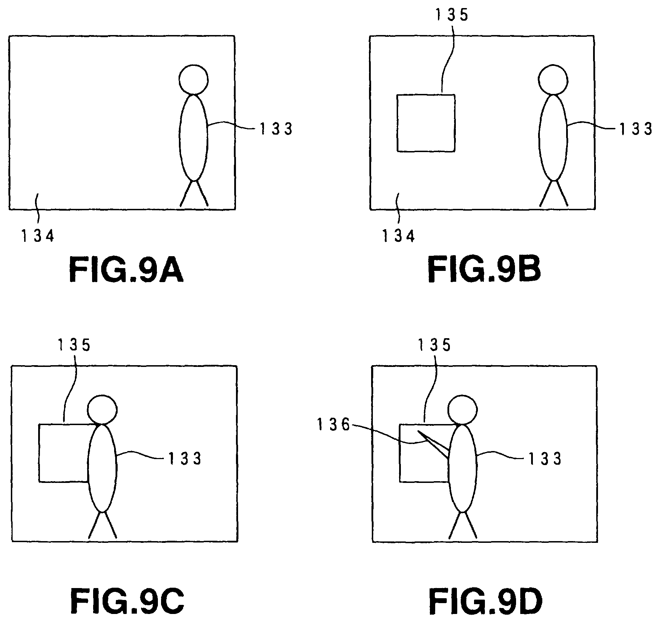

The performer is caused to carry out performance in this way, and pictures ultimately obtained by picking up image of this performer by the stereo camera to synthesize CG with image from the main camera are shown in FIGS. 9A, 9B, 9C and 9D.

At time t1, as shown in FIG. 9A, "CG background picture (white wall 134)" is synthesized with projected image 133 of performer obtained from the main camera. Since patterned wall paper is made up by CG as background picture in practice also as previously described, the portion of 134 results in projected image of the patterned wall paper. In this case, that wall is caused to be white. In addition, since performer is present at the right end of the studio, projected image 133 is located at the right side in FIG. 9A At this time, "CG flip picture" is not yet synthesized.

At time t2, as shown in FIG. 9B, "CG flip picture 135" and "CG background picture (white wall 134)" are synthesized with picture obtained from the main camera. This synthetic picture is picture ultimately obtained at the tune t2. CG flip picture 135 is projected image of plate on which the content of news prepared by virtual CG, etc. is written.

At time t3, since performer is moved to the central portion as shown in FIG. 9C, projected image 133 of the performer is positioned at the central portion even on the screen. This is picture ultimately obtained at the time t3.

At time t4, as shown in FIG. 9D, since the performer stretches arm, projected image of arm 136 of the performer appears even on the screen. This image is picture ultimately obtained at time t4.

For viewer who looks at pictures of FIGS. 9A, 9B, 9C and 9D, it looks like that the performer is located at the right end at time t1. At time t2, it looks as if plate on which the content of news, etc. is written suddenly appears at the left side. At time t3, it looks like that the performer approaches that plate. At time t4, it looks like that the performer points that plate and makes explanation. In a manner as stated above, the viewer is caused to produce illusions as if performer makes explanation while looking at the plate which has suddenly appeared.

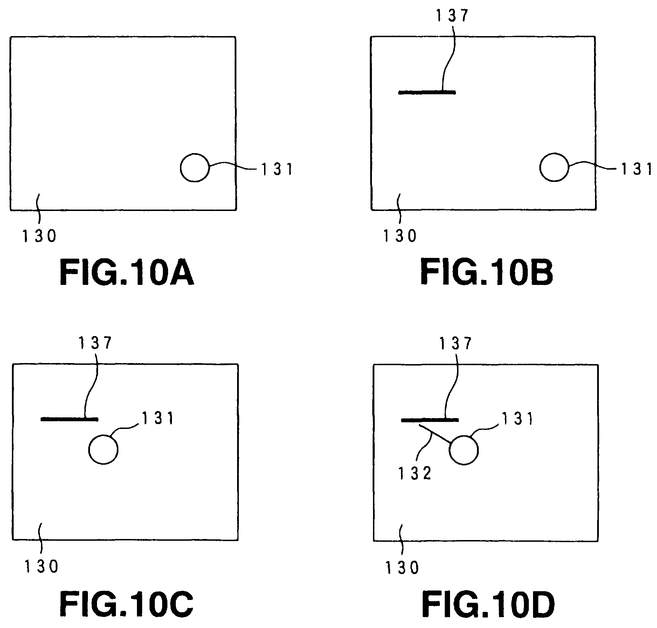

Namely, the viewer is caused to produce illusions as if he looks at picture from the camera which has taken picture of the studio shown in FIGS. 10A, 10B, 10C, 10D. At time t1, as shown in FIG. 10A, it looks like that performer 131 is present at the right end within the studio 130. At time t2, as shown in FIG. 10B, it looks like that the plate 137 suddenly appears at the left side. At time t3, as shown in FIG. 10C, it looks like that performer 131 approaches the vicinity of the plate 137 within the studio 130. At time t4, as shown in FIG. 10D, it looks like that performer 131 points the plate 137 within the studio 130 in the state where arm 132 is raised.

As seen from this example, the feature of the virtual studio or the virtual set is that viewer is permitted to produce illusions as if material (object) which does not exist in reality is synthesized by using CG to thereby provide object existing in reality (e.g., the above-described plate).

Meanwhile, in the case where performer carries out performance while pointing "plate on which content of news, etc. is written" as described above, when consideration is made from standpoint of performer, he must carry out performance thinking that virtual plate is present within nothing or null space. Since the performer cannot understand where the plate is present, the performer is carrying out performance while checking picture obtained by synthesizing the ultimate CG by monitor within the studio and thinking that "plate should be located at this position". Accordingly, there was the problem that performance is very difficult to be carried out.

Namely, hitherto, when the virtual studio or the virtual set, etc. is used to synthesize CG with imaged picture to find it to the viewer, the performer must carry out performance while thinking as if "object to be synthesized later" is present. Accordingly, there was the problem that performer is difficult to carry out performance.

Disclosure of the Invention

This invention has been made in view of the above-described problems, and its object is to provide a picture processing method, a picture processing apparatus, a picture processing panel, and a recording medium which permit performer to easily carry out performance.

A picture processing method and a picture processing apparatus according to this invention are adapted to remove only the portion of specific color area from original picture to further synthesize other picture with picture in which only object located at three-dimensional position included in designated three-dimensional area of the three-dimensional position of object projected onto the original picture is taken out to provide synthetic output.

Moreover, a picture processing method and a picture processing apparatus according to this invention are adapted to remove only the portion of specific color area from an original picture to further synthesize other picture with picture obtained by taking out only object located at three-dimensional position included in the three-dimensional area adjustably (variably) designated of three-dimensional position of object projected onto the original picture.

Further, a recording medium according to this invention is adapted so that there is recorded processing procedure including a step of removing only the portion of specific color area from an original picture, a step of taking out only object located at three-dimensional position included in the designated three-dimensional area of three-dimensional position of object projected onto the original picture, and a step of synthesizing other picture with picture from which only object located at three-dimensional position included in three-dimensional area is taken out.

In accordance with this invention, e.g., director who manages performance adaptively designates the three-dimensional area with time by the world coordinate system to thereby take out only projected image imaged on the main camera corresponding to the inside of that area. Thus, e.g., actual plate to which frame which is not blue is attached is prepared to designate the area so as not to first include that actual plate to synthesize GP flip picture so as to cover actual plate with reference to the frame thereof to designate, for a second time, the area so as to include the actual plate. Thus, even if performer approaches the actual plate, projected image of performer can be extracted. Accordingly, the performer can carry out performance while pointing actual plate.

Further, in this invention, in extracting performer, etc. from picture, the portion of blue is first removed to further also remove the area except for the three-dimensional area that director who manages performance has designated. Accordingly, such an approach is employed to exclude background in the designated three-dimensional area. Thus, it is not required that pattern is blue system. Conspicuous pattern which is not blue system is attached, thereby making it easy to recognize projected image of pattern from that picture when photographing is carried out by the camera. Further, pattern imaged on that picture is outside the designated three-dimensional area, and is removed in key extraction. Accordingly, there is no problem.

In addition, hitherto, performer could not prepare synthetic picture as if performer carries out describe operation, by pen, on the plate prepared by CG. In this invention, performer carries out write operation by pen onto picture processing panel. Further, since character written by pen is left in key extraction, such character is left also in the synthetic picture ultimately obtained. Namely, it is possible to prepare synthetic picture as if performer carries out describe operation by pen onto the plate prepared by CG. This is based on the feature of this invention that performer writes rough copy onto actual plate by color of blue system in advance, and writes it by pen of conspicuous color which is not blue system, thereby making it possible to write it while also precisely aligning position with respect to CG.

Brief Description of the Drawings

FIG. 1 is an external perspective view of conventional calibration unit.

FIG. 2 is a view showing the state where two cameras are slid by the calibration unit shown in FIG. 1.

FIG. 3 is a view showing the state where flat plate is slid by the calibration unit shown in FIG. 1.

FIG. 4 is a view showing the state where point on a predetermined line is projected onto a predetermined position of screen.

FIG. 5 is a view for explaining a method in which stereo camera system determines position on three-dimension of object by using calibration data obtained by the calibration unit shown in FIG. 1.

FIG. 6 is a view for explaining rotational transform and translational transform by movement of the stereo camera.

FIG. 7 is a view for explaining the relationship between world coordinates and coordinates with camera being as reference.

FIG. 8A is a view when position of performer at time t1 within conventional virtual set studio is viewed from the upper side, FIG. 8B is a view when position of performer at tune t2 therewithin is similarly viewed from the upper side, FIG. 8C is a view when position of performer at time t3 therewithin is viewed from the upper side, and FIG. 8D is a view when position of performer at time t4 therewithin is viewed from the upper side.

FIGS. 9A, 9B, 9C, 9D are views respectively showing synthetic pictures ultimately obtained at times t1, t2, t3, t4.

FIGS. 10A, 10B, 10C, 10D are respective views in which position of performer within the studio and position of virtual plate prepared by CG are viewed from the upper side at times t1, t2, t3, t4.

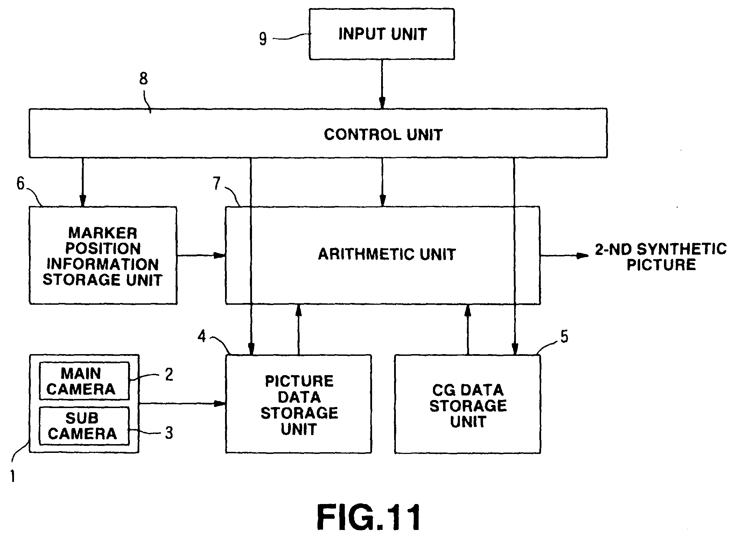

FIG. 11 is a block diagram of a picture processing apparatus serving as picture processing method and picture processing apparatus according to this invention.

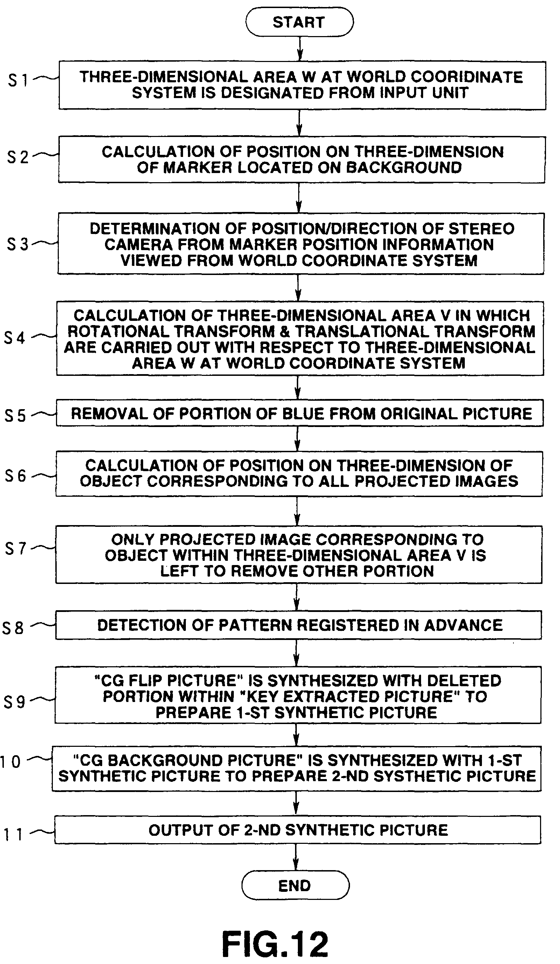

FIG. 12 is a flowchart showing the detail of picture processing method that picture processing apparatus serving as the embodiment executes.

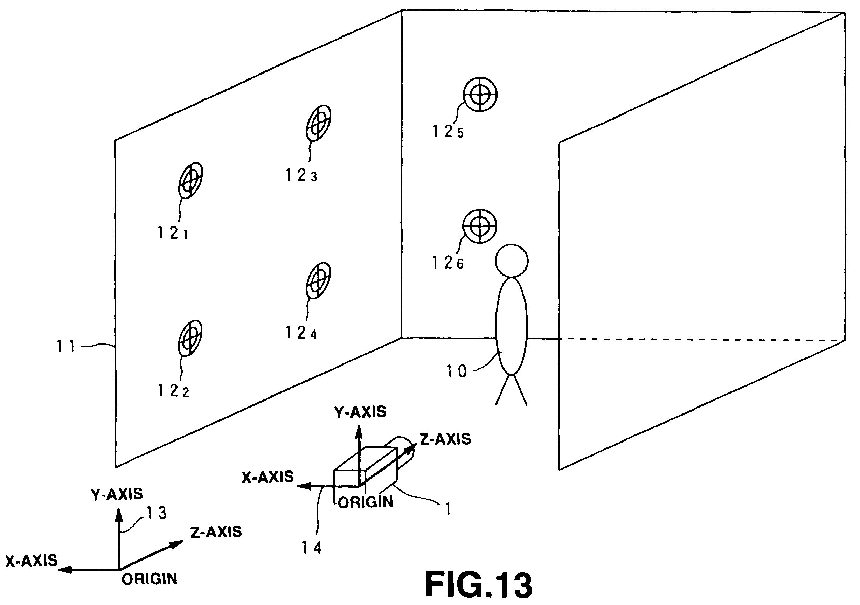

FIG. 13 is a view showing studio inside serving as portion where the picture processing unit executes the picture processing method.

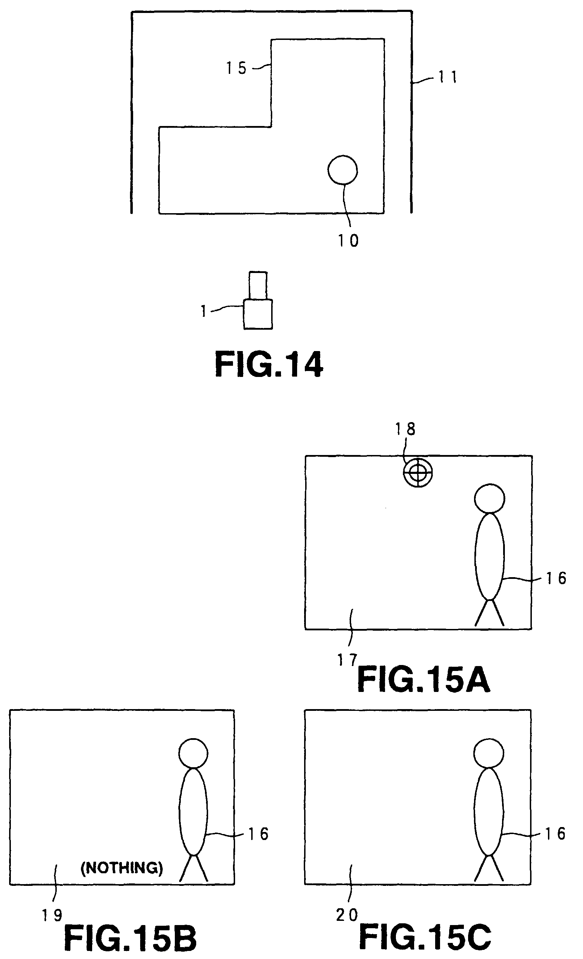

FIG. 14 is a view in which the state of the studio inside at time T1 is viewed from upper side.

FIG. 15A is a view showing original picture in the state of FIG. 14, FIG. 15B is a view showing key extracted picture in the same state, and FIG. 15C is a view showing second synthetic picture in the same state.

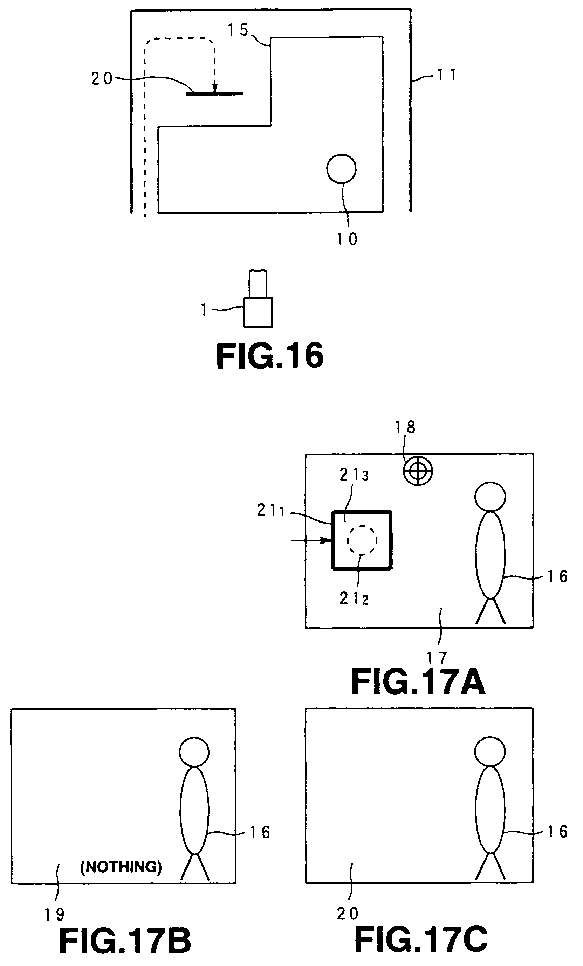

FIG. 16 is a view showing the state of the studio inside at time T2 viewed from the upper side.

FIG. 17A is a view showing original picture in the state of FIG. 16, FIG. 17B is a view showing key extracted picture in the same state, and FIG. 17C is a view showing second synthetic picture in the same state.

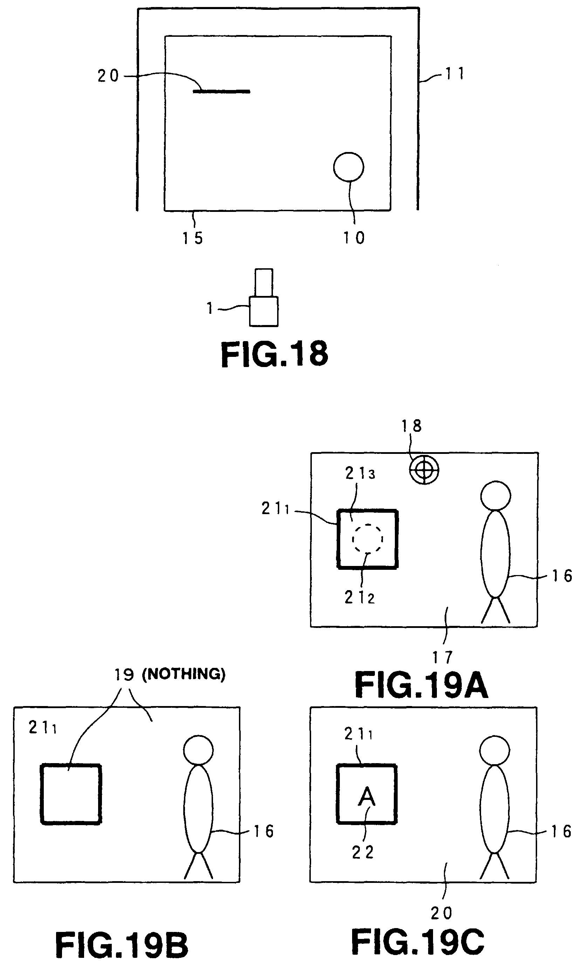

FIG. 18 is a view showing the state of the studio inside at time T3 viewed from the upper side.

FIG. 19A is a view showing original picture in the state of FIG. 18, FIG. 19B is a view showing key extracted picture in the same state, and FIG. 19C is a view showing second synthetic picture in the same state.

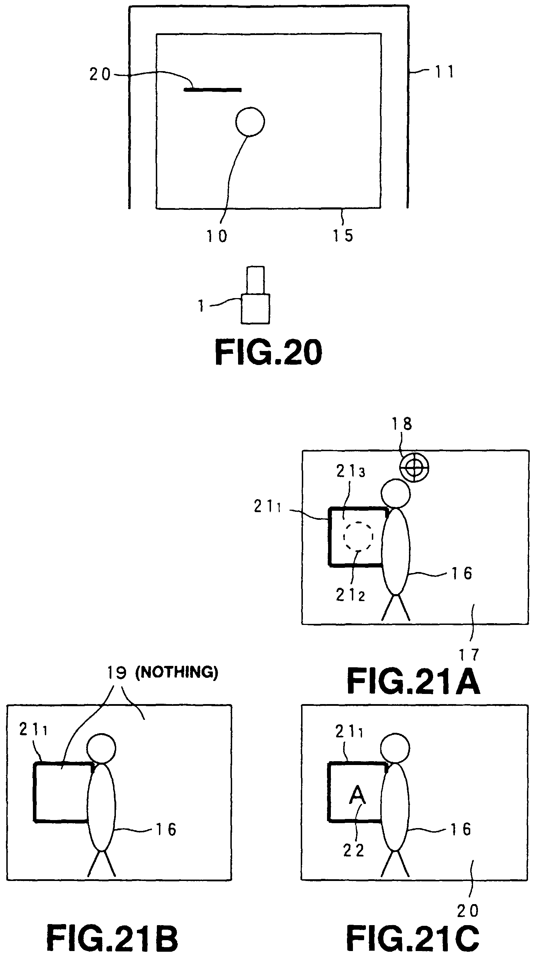

FIG. 20 is a view showing the studio inside at time T4 viewed from the upper side.

FIG. 21A is a view showing original picture in the state of FIG. 20, FIG. 21B is a view showing key extracted picture in the same state, and FIG. 21C is a view showing second synthetic picture in the same state.

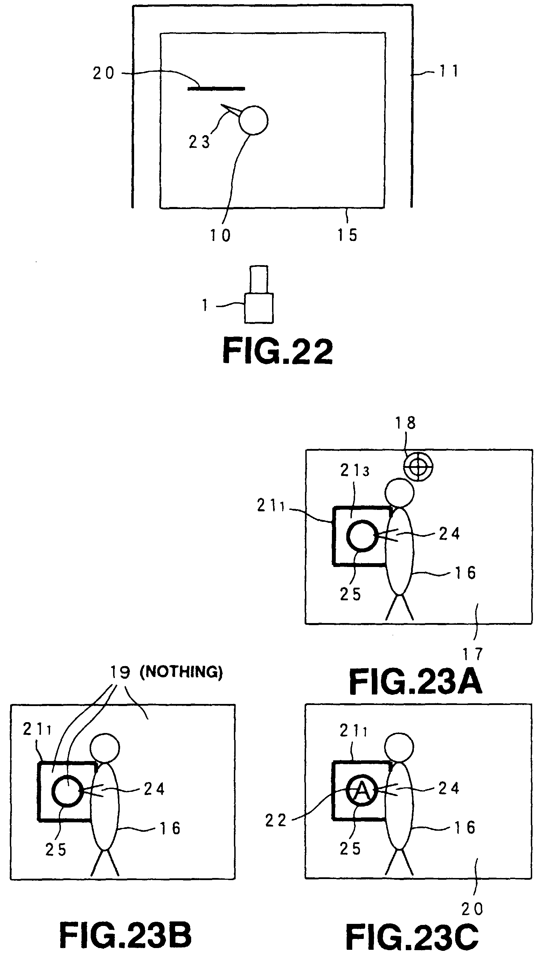

FIG. 22 is a view showing the state of the studio inside at time T5 viewed from the upper side.

FIG. 23A is a view showing original picture in the state of FIG. 22, FIG. 23B is a view showing key extracted picture in the same state, and FIG. 23C is a view showing second synthetic picture in the same state.

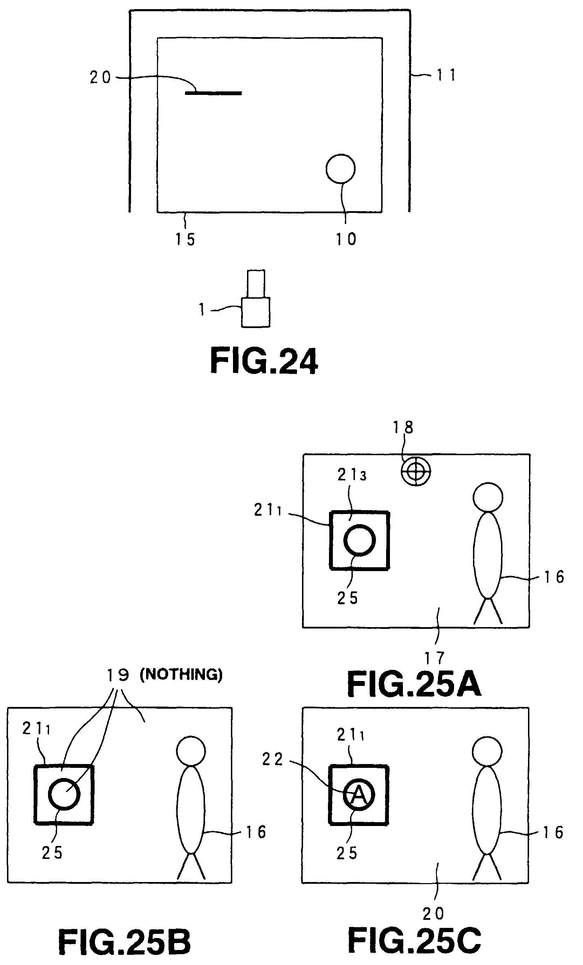

FIG. 24 is a view when the state of the studio inside at time t6 is viewed from the upper side.

FIG. 25A is a view showing original picture in the state of FIG. 24, FIG. 25B is a view showing key extracted picture in the same state, and FIG. 25C is a view showing second synthetic picture in the same state.

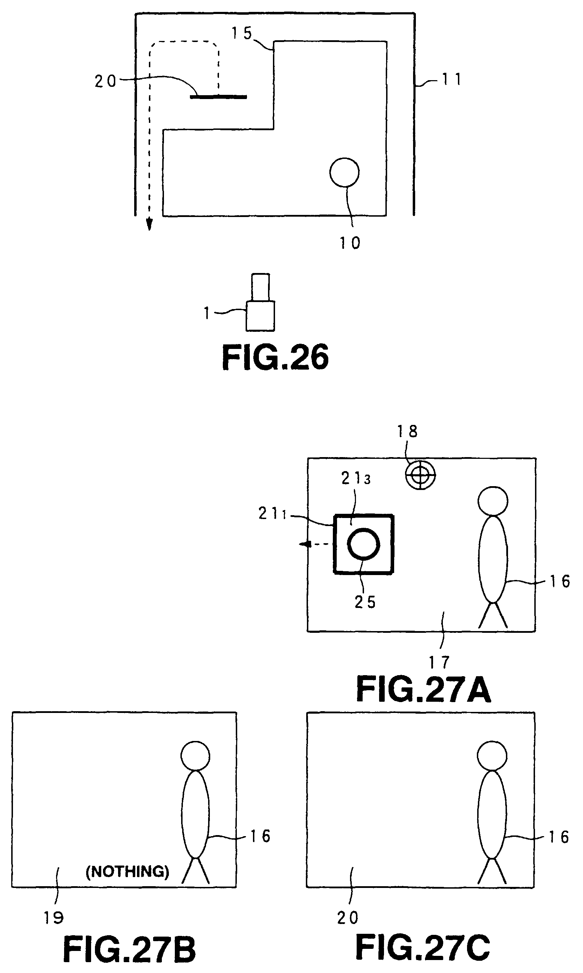

FIG. 26 is a view when the state of the studio inside at time T7 is viewed from the upper side.

FIG. 27A is a view showing original picture in the state of FIG. 26, FIG. 27B is a view showing key extracted picture in the same state, and FIG. 27C is a view showing second synthetic picture in the same state.

Best Mode for Carrying Out the invention

Explanation will now be described with reference to the attached drawings in connection with preferred embodiment according to this invention.

This embodiment is directed to a picture processing apparatus as shown in FIG. 11, and comprises a stereo camera 1 composed of a main camera 2 and a sub camera 3, a picture data storage unit 4 for storing picture data from the main camera 2 and the sub camera 3 of this stereo camera 1, a CG data storage unit 5 for storing computer graphic (CG) data therein, a marker position information storage unit 6 for storing position information of marker viewed from the world coordinate system in advance, an arithmetic (calculating) unit 7 for carrying out a series of calculations which will be described later on the basis of information inputted from the input unit 9, and a control unit 8 for controlling the picture data storage unit 4, the CG data storage unit 5 and the marker position information storage unit 6.

The control unit 8 includes recording medium therewithin and is adapted to store therein program for allowing the arithmetic unit 7 to carry out a series of calculations which will be described later. The control unit 8 suitably reads out, on the basis of information inputted from the control unit 9, data from respective ones of the picture data storage unit 4, the CG data storage unit 5 and the marker position information storage unit 6 to deliver them to the arithmetic unit 7 to allow the arithmetic unit 7 to carry out suitable calculation.

Namely, the control unit 8 sequentially takes out, from the recording medium included therewithin, processing procedure including a step of removing only the portion of specific color area, a step of taking out only object located at three-dimensional position included in the designated three-dimensional area of the three-dimensional position of the object projected onto the original picture, and a step of synthesizing other picture with picture thus taken out, thus to allow the arithmetic unit 7 to carry out a series of operations. In this case, the above-mentioned three-dimensional area is adjustably (variably) designated with time.

Further, the control unit 8 also carries out a control to output, from the output terminal, second synthetic picture which is ultimately synthesized picture obtained by calculation at the arithmetic unit 7.

In this example, this picture processing apparatus allows the arithmetic unit 7 to carry out the picture processing method according to this invention in accordance with control at the control unit 8. This picture processing method is processing procedure shown in the flowchart of FIG. 12 which will be described later in detail, and is a picture processing method, in broad outline, to remove only the portion of specific color area from the original picture to further synthesize other picture with picture in which only object located at three-dimensional position included in designated three-dimensional area of three-dimensional position of object projected onto the original picture is taken out to output it. In this case, the flowchart shown in FIG. 12 is stored at the recording medium within the control unit 8 as described above.

The operation for allowing the picture processing apparatus to carry out such a picture processing to execute processing procedure as shown in FIG. 12 to synthesize CG with projected image of performer 10 actually imaged within the studio of FIG. 13 will now be described.

Initially, the state of the studio inside shown in FIG. 13 will be described. While the stereo camera 1 is labeled in such a manner that the number of cameras is one, main camera 2 and sub camera 3 are integrated as shown in FIG. 11. Within the studio, performer 10 is present within space defined or surrounded by a channel-shaped wall 11 of blue serving as background. Markers $12_1$, $12_2$, $12_3$, $12_4$, $12_5$, $12_6$ • • • of pattern such that conspicuous colors which are not blue system, e.g., outside circle is red and inside circle is yellow are attached to the wall 11 of blue.

By carrying out photographing within such studio, projected images of the markers $12_1$, $12_2$, $12_3$, $12_4$, $12_5$, $12_6$ • • • are conspicuous among those pictures. Accordingly, it is easy to recognize them. Moreover, while six markers are provided in this example, it is a matter of course that the number of markers may be larger or smaller than that. When a large number of markers $12_1$, $12_2$, $12_3$, $12_4$, $12_5$, $12_6$ • • • are provided, even if there is any marker which is blocked (shielded) by the performer 10 and is not therefore projected onto the stereo camera 1, other markers can be seen from the stereo camera 1.

Hitherto, marker of blue system is attached to the background of blue. The reason why the marker is caused to be blue system is as follows. Since the blue portion is deleted in extracting performer, etc. from picture later at the time of so-called key extraction to thereby carry out key extraction, the marker can be also deleted together with the background. However, there was the problem that when marker of blue system on the background of blue is photographed by the camera, it is difficult to recognize projected image of the marker from that picture.

On the contrary, in the picture processing apparatus according to this invention, in extracting performer 10, etc. from picture within the studio shown in FIG. 13, the portion of blue is first removed. Further, the portion except for the three-dimensional area W which will be described later that the director has designated at the input unit 9 is also removed. Accordingly, the director makes a designation so as not to include wall 11 of blue on which markers $12_1$, $12_2$, $12_3$, $12_4$, $12_5$, $12_6$ · · · are attached, thereby permitting the markers $12_1$, $12_2$, $12_3$, $12_4$, $12_5$, $12_6$ · · · to have conspicuous color which is not blue system.

An approach is employed to attach conspicuous markers $12_1$, $12_2$, $12_3$, $12_4$, $12_5$, $12_6$ · · · which are not blue system onto the wall 11 of blue to thereby facilitate recognition of projected images of markers from that picture when those markers are photographed by camera. Further, the markers $12_1$, $12_2$, $12_3$, $12_4$, $12_5$, $12_6$ · · · imaged on these pictures are outside the three-dimensional area W designated by the director and are removed in key extraction. Accordingly, this is no problem.

Positions of these markers $12_1$, $12_2$, $12_3$, $12_4$, $12_5$, $12_6$ · · · are measured with the world coordinate system 13 being as reference in advance, and are stored as marker position information in the marker position information storage unit 6 shown in FIG. 11.

The operation explanation using the flowchart of FIG. 12 will now be carried out. There are also instances where respective steps of this flowchart may not be executed in dependency upon circumstances of the studio inside.

Initially, the director who manages photographing within the studio designates three-dimensional area W at the world coordinate system 13 by input unit 9 at step S1 of FIG. 12.

Thus, the control unit 8 reads out, from the picture data storage unit 4, picture data obtained from the main camera 2 and the sub camera 3 constituting the stereo camera 1 to deliver it to the arithmetic unit 7. The arithmetic unit 7 calculates position on three-dimension (dimensional space) of the marker.

Then, at step S3, the control unit 8 reads, from the marker position information storage unit 6, three-dimensional position in which the world coordinate system 13 measured in advance is caused to be reference. At the arithmetic unit 7, in what state (rotational transform R, translational transform T) current position and direction of the stereo camera 1 are taken with the world coordinate system 13 being as reference is calculated from position on three-dimension (dimensional space) of marker when viewed from the three-dimensional coordinate system 14. Since calculation for determining the rotational transform R and the translational transform T is carried out by using picture from the stereo camera 1 at respective times, those transforms can be precisely determined even in the case where the stereo camera 1 is moved.

Since color of blue system is conventionally used in the marker, its recognition is very difficult. For example, when light irradiated onto the wall is changed, there were cases where there results the state where those markers cannot be recognized. However, in the studio where picture processing apparatus serving as this embodiment is used, markers $12_1$, $12_2$, $12_3$, $12_4$, $12_5$, $12_6$ · · · which are not blue system are used. Accordingly, recognition is easy and it is possible to precisely determine position and direction of camera.

Then, at step S4, the control unit 8 sends, to the arithmetic unit 7, three-dimensional area W that the director has inputted from the input unit 9 at the step S1 to allow the arithmetic unit 7 to calculate the three-dimensional area V when viewed from position and direction of the stereo camera 1 determined at the step S3. Namely, the arithmetic unit 7 calculates, by control of the control unit 8, three-dimensional area V in which rotational transform R and translational transform T have been carried out with respect to the three-dimensional area W at the world coordinate system.

Then, at step S5, the control unit 8 reads out picture data imaged by the main camera 2 of the stereo camera 1 from the picture data storage unit 4 to send it to the arithmetic unit 7. The arithmetic unit 7 removes the portion of blue from this original picture.

Then, at step S6, the control unit 8 reads out picture data imaged by respective cameras 2 and 3 of the stereo camera 1 from the picture data storage unit 4 to send it to the arithmetic unit 7. The arithmetic unit 7 calculates parallax of the cameras 2 and 3 from these picture data to calculate position on three-dimension (dimensional space) of object (real thing) corresponding to all projected images. In this case, this position is determined as position in the three-dimensional coordinate system in which the stereo camera 1 is caused to be reference.

Then, at step S7, the control unit 8 allows the arithmetic unit 7 to determine only object (real thing) within the three-dimensional area V determined at the step S4 from position on three-dimension of object (real thing) determined at the step S6. Further, the arithmetic unit 7 allows only projected image onto the main camera 2 of the object (actual thing) provided within three-dimensional area V to be left to remove other portion from the original picture. Thus, it is

8

possible to prepare picture in which "blue portion" and the area "except for area V" have been all deleted, so-called "key extracted picture" from original picture.

Then, at step S8, the control unit 8 controls the arithmetic unit 7 to search pattern in which frame of red, etc. is registered in advance from picture data imaged by the main camera 2 and stored in the picture data storage unit 4.

Then, at step S9, the control unit 8 allows the arithmetic unit 7 to synthesize "CG flip picture" with the portion deleted in the "key extracted picture" prepared at the step S7 to prepare first synthetic picture. The position where synthesis is carried out is the same position as the projected image position of pattern detected at the step S8.

Then, at step S10, the control unit 8 allows the arithmetic unit 7 to synthesize "CG background picture" with the portion being continued to be still deleted even if "CG flip picture" is synthesized within the first synthetic picture to prepare ultimately obtained second synthetic picture to be offered (provided) to viewer.

Further, finally, at step S11, the control unit 8 allows the arithmetic unit 7 to output second synthetic picture from the output terminal therefrom.

The detailed operation in the case where the picture processing unit is caused to execute the processing procedure of the flowchart shown in FIG. 12 within the studio shown in FIG. 13 will be described with reference to FIGS. 14 to 27.

Initially, FIG. 14 is a view showing that the state of the studio inside shown in FIG. 13 at time T1 is viewed from the upper side. Original picture imaged on the main camera 2 in the state of FIG. 14 is shown in FIG. 15A. Moreover, picture from which unnecessary portion has been removed of the original picture, i.e., "key extracted picture" is shown in FIG. 15B. In addition, synthetic picture to be offered (provided) to the viewer ultimately obtained, i.e., second synthetic picture is shown in FIG. 15C.

Moreover, FIG. 16 is a view when the state of the studio inside at time T2 is viewed from the upper side. FIGS. 17A, 17B, 17C respectively show original picture imaged on the main camera 2 in the state of FIG. 16, "key extracted picture" from which unnecessary portion has been removed of the original picture in that state, and second synthetic picture to be offered (provided) to viewer ultimately obtained in that state. In this case, the time T2 is time subsequent to time T1.

Further, FIG. 18 is a view when the state of the studio inside at time T3 is viewed from the upper side. FIGS. 19A, 19B, 19C respectively show original picture, "key extracted picture" and second synthetic picture in the state of FIG. 18. In this case, time T3 is time subsequent to time T2.

Further, FIG. 20 is a view when the state of studio inside at time T4 is viewed from the upper side. FIGS. 21A, 21B and 21C respectively show original picture, "key extracted picture" and second synthetic picture in the state of FIG. 20. In this case, time T4 is time subsequent to time T3.

Further, FIG. 22 is a view when the state of the studio inside at time T5 is viewed from upper side. FIGS. 23A, 23B and 23C respectively show original picture, "key extracted picture" and second synthetic picture in the state of FIG. 22. In this case, time T5 is time subsequent to time T4.

Further, FIG. 24 is a view when the state of the studio inside at time T6 is viewed from upper side. FIGS. 25A, 25B and 25C respectively show original picture, "key extracted picture" and second synthetic picture in the state of FIG. 24. In this case, time T6 is time subsequent to time T5.

Further, FIG. 26 is a view when the state of the studio inside at time T7 is viewed from the upper side. FIGS. 27A, 27B and 27C respectively show original picture, "key extracted picture" and second synthetic picture in the state of FIG. 26. In this case, time t7 is time subsequent to time T6.

As shown in FIGS. 14, 16, 18, 20, 22, 24 and 26, stereo camera 1, performer 10 and wall 11 of blue serving as background in which marker is attached are disposed within the studio. In addition, although not shown in practice, three-dimensional area 15 that the director has designated is described. This three-dimensional area 15 is caused to be area W in the world coordinate system.

Director can designate three-dimensional area (W) 15 at respective times. In practice, such three-dimensional area (W) is selected from the pattern of the area in the world coordinate system registered in advance. Here, any one of patterns of two kinds of areas is selected. The three-dimensional area (W) shown in FIGS. 14, 16 and 26 is the first pattern, and the three-dimensional area (W) shown in FIGS. 18, 20, 22 and 24 is the second pattern. Namely, at times T1, T2, T7, director designates the first pattern. At times T3, T4, T5, T6, director designates the second pattern.

Moreover, in FIGS. 16, 18, 20, 22, 24 and 26, plate 20 is described. This plate 20 is constituted by blue, and the portion that performer 10 writes by pen later in point of time is drafted (caused to undergo rough copy) by blue system. Fringe is made on this plate 20. At this fringe portion, frame of conspicuous color, e.g., red which is not blue system is attached. It is to be noted that "portion that performer writes by pen later" is the content that performer is desired to write on the spot at "plate on which content of news, etc. is written" of CG to be synthesized, and is determined in advance.

At time T2 in the state shown in FIG. 16, this plate 20 is carried through the outside of the three-dimensional area (W) 15 designated at that time. Further, for a time period from times T3 to T6, this plate 20 is placed within the studio as shown in the figure. At time T7 in the state shown in FIG. 26, this plate 20 is carried through the outside of area 15 designated at that time. Performer 10 is present at the right end of the studio at times T1 to T3, and is then moved to the side of plate 20. Accordingly, the performer 10 is present at the central portion at times T4 and T5. Further, since the performer 10 is then moved to the right end, it is at the right end at times T6 and T7.

Respective A of FIGS. 15, 17, 19, 21, 23, 25 and 27 are original pictures imaged on the main camera 2 as described above. CG is synthesized with original picture imaged on this main camera 2 to thereby prepare ultimate synthetic picture. Projected image 16 of performer is included in the original picture. Moreover, at this original picture, there is also projected image 17 of wall 11 of blue serving as background where marker is written. Generally, in the projected image 17 of the wall 11 of blue, plural projected images 18 of markers $12_1$, $12_2$, $12_3$, $12_4$, $12_5$, $12_6$ • • • shown in FIG. 13 are included. In the figure, those projected images are collectively represented as one projected image 18.

In the original pictures of respective A of FIGS. 17, 21, 23, 25 and 27, projected image 21 of plate 20 actually existing is imaged. The projected image 21 is composed of a projected image $21_1$ of red frame of plate 20, a projected image $21_2$ of the portion of rough copy of the portion that the performer writes by pen later, and a projected image $21_3$ of the plate except therefor. The projected image $21_1$ of frame of plate is the portion of red. The projected image $21_2$ of the rough copy portion is blue system. The portion $21_3$ of the projected image of the plate except therefor is blue.

Unnecessary portion is removed from this original picture to prepare key extracted picture to further synthesize CG to thereby prepare final second synthetic picture.

Respective B of FIGS. 15, 17, 19, 21, 23, 25 and 27 are picture in which unnecessary portion is removed of the original picture, i.e., key extracted picture as described above.

In these key extracted pictures, projected image 16 of performer existing within original picture at each time is left as necessary portion in the state where it is not removed. In addition, the portion where the unnecessary portion is removed results in nothing or null portion 19.

In respective B of FIGS. 19, 21, 23 and 25, projected image $21_1$ of plate frame existing within original picture at each time is also left as necessary portion in the state where it is not removed.

Respective C of FIGS. 15, 17, 19, 21, 23, 25 and 27 are second synthetic picture offered (provided) to the viewer finally obtained as described above. In this second synthetic picture, projected image 16 of performer 10 is left. In addition, projected image $21_1$ of plate frame is also left in respective C of FIGS. 19, 21, 23 and 25.

Moreover, while description is made in FIGS. 14, 16, 18, 20, 22, 24 and 26 such that stereo camera 1 is fixed, it may be moved in practice. As explained with reference to FIG. 13, it is possible to specify three-dimensional position of that object on the basis of positions of projected images imaged on respective cameras at respective times. In this case, the operation to specify such position is carried out in the coordinate system in which stereo camera 1 at that time is caused to be reference. At respective times, it is possible to determine position and direction of stereo camera 1 at every time from projected images of markers $12_1$, $12_2$, $12_3$, $12_4$, $12_5$, $12_6$ • • • on the wall 11 of blue serving as background.

The processing procedure of the flowchart of FIG. 12 will now be described in accordance with times T1 to T7. After the processing at a certain time is completed, the flowchart of FIG. 12 is repeated as processing at the next time. In this case, steps which are not processed can exist in dependency upon circumferences of the studio inside at times T1 to T7 as described above.

At time T1, three-dimensional area (W) 15 of FIG. 14 is selected by the director, and is registered as set of points on three-dimension in which the world coordinate system 13 shown in FIG. 13 is caused to be reference. As previously described, it is possible to recognize in what state (rotational transform R, translational transform T) position and/or direction of the stereo camera 1 at time T1 take with respect to the world coordinate system 13. Accordingly, the same transform as above is carried out with respect to the area (W) 15 to assume this to be three-dimensional area (V). Namely, V = {point where rotational transform R and translational transform T are carried out with respect to respective points on the three-dimensional area W) . Transform from W to V is nothing but an only operation to merely transform area (W) 15 of FIG. 14 viewed from the world coordinate system 13 into coordinate system 14 of FIG. 13 with stereo camera 1 at time T1 being as reference.

Then, the portion of blue of original picture shown in FIG. 15A is removed. Thus, the portion except for marker of background of blue is removed from projected image 17. Since three-dimensional positions of respective bodies within the original picture are measured at the coordinate system 14 with stereo camera 1 at time T1 being as reference, object in which its position is not included within the area V is removed. Thus, projected image 18 of marker attached to the background is removed. The reason thereof is that this portion is not included in three-dimensional area V. Accordingly, key extracted picture after unnecessary portion has been removed in this way is as shown in FIG. 15B. Projected image 16 of performer is left in this work. In addition, since background 17 (including projected image 18 of marker) shown in FIG. 15A is deleted, this portion results in nothing or null portion 19 as shown in FIG. 15B.

Since projected image of "plate on which content of news, etc. is written" prepared by CG is not synthesized at this time point T1, only projected image of "white wall" which is background prepared by CG is synthesized. "White wall" virtually exists at position of z=10 with, e.g., the world coordinate system being as reference.

Initially, in what state (rotational transform R, translational transform T) position and direction of the stereo camera 1 at time T1 are taken with respect to the world coordinate system is examined. Further, how virtual white wall present at z=10 is viewed when imaged from virtual camera having positional relationship between the rotational transform R and the translational transform T with respect to the origin of the world coordinate system is calculated. Picture when the virtual white wall is viewed from virtual position is called "CG background picture" at time T1.

In the "key extracted picture" at time T1, picture of "CG background picture" is inserted into the removed portion. This picture is second synthetic picture shown in FIG. 15C. As a result, the second synthetic picture is picture as if performer exists in the state where the white wall is caused to be background. Namely, projected image 16 of performer is imaged on second synthetic picture of FIG. 15C in the state where "white wall" 20 prepared by CG is caused to be background.

At time T2 shown in FIG. 16, the same three-dimensional area (W) 15 as that of FIG. 14 is selected by the director. Initially, three-dimensional area V is determined similarly to that at time T1. Namely, since in what state position and direction of the stereo camera 1 at time T2 are taken with respect to the world coordinate system can be recognized, the same transform as above is carried out with respect to the three-dimensional area (W) 15. In this case, it is not limited that R and T at time T2 are the same as R and T at time T1. The reason thereof is that the stereo camera 1 may be moved. Also at times subsequent thereto, there are also instances where R and T are changed. Accordingly, even if the three-dimensional area W is the same, the three-dimensional area V changes with time.

Moreover, at time T2, actually existing plate 20 is carried through the passage except for the three-dimensional area (W) 15 shown in FIG. 16. Accordingly, in the original picture shown in FIG. 17A at time T2, projected image 21 of the actually existing plate 20 is caused to undergo frame-in, i.e., falls within the original picture.

In the original picture shown in FIG. 17A, the portion of blue (and blue system) is (are) removed. Further, object in which that position is not included within the three-dimensional area V is removed. Thus, background 17 of FIG. 17(A) (including projected image 18 of marker) and projected image 21 of plate including plate frame are deleted. Projected image 16 of performer is left in this work. After such removing work, key extracted picture shown in FIG. 17B can be obtained.

Since projected image of "plate on which content of news, etc. is written" prepared by CG is not synthesized even at this time T2, only projected image of "white wall" serving as background prepared by CG is synthesized. As previously described, "white wall" virtually exists at position of z= 10 with the world coordinate system being as reference.

In the "key extracted picture" at time T2, picture of "CG background picture" at time T2 is inserted into the removed portion. This picture is second synthetic picture shown in FIG. 17C. The second synthetic picture results in picture as if performer exists with white wall being as background. Namely, in the second synthetic picture, projected image 16 of performer is imaged on "white wall" 20 prepared by CG.

At time T3, three-dimensional area (W) 15 as shown in FIG. 18 is selected by the director. Similarly to times until now, the same transform as position and direction (rotational transform R, translational transform T) of the stereo camera at time T3 with respect to the world coordinate system is carried out with respect to the three-dimensional area W to obtain three-dimensional area V.

In the original picture shown in FIG. 19A, the portion of blue (and blue system) is (are) removed. Further, object in which that position is not included within the V is also removed. Thus, background 17 (including marker 18 portion) shown in FIG. 19A and projected image of plate except for the frame are deleted. Further, projected image 16 of performer and projected image $21_1$ of frame of plate are left in this work. The reason thereof is that since projected image 17 of the portion in which there is no marker within the background and projected images $21_2$, $21_3$ of plate except for frame $21_1$ of red of the plate are blue (or blue system), they are removed. Since the projected image 18 of marker attached to the background is not included in the three-dimensional area V, they are removed. The figure after such removing work results in key extracted picture shown in FIG. 19B.

At this time T3, synthesis of projected image of "plate on which content of news, etc. is written" prepared by CG is carried out. To realize this, the portion of frame of red is searched. As search method, two methods are conceivable. In this case, either one of methods may be used. The first method is a method of searching red frame on three-dimension. Since the stereo camera is used, three-dimensional positions of respective bodies can be measured. In view of the above, it is sufficient to find out frame of red within the measured object. In more practical sense, object which is, e.g., red and line segment on three-dimension is selected. If the number of selected line segments is four, they are considered as the portion of the frame of red. If the number of line segments is three or less, other line segment of red is predicted to allow the number of line segments to be four to allow them to be frame of red. Such phenomenon takes place in the case where a portion of red frame cannot be seen because performer, etc. is present at the stereo camera side relative to red frame. If three-dimensional position of the portion of frame of red can be recognized, position of its projected image $21_1$ in the original picture of FIG. 19A can be recognized. Accordingly, also in the "key extracted picture" shown in FIG. 19B, position of projected image $21_1$ of red frame can be seen. Even if a portion of the red frame is not imaged because it does not overlap with performer, where projected image of red frame exists in the "key extracted picture" can be expected.

Another method is a method of directly searching projected image of red frame on the two-dimensional plane in the "key extracted picture" shown in FIG. 19B. In more practical sense, object which is, e.g., red and line segment on the two-dimension is selected. If the number of selected line segments is four, those line segments are portion of projected image of frame of red. If the number of line segments is three or less, other line segment of red is predicted to allow the number of line segments to be four to allow them to be projected image of frame of red. Even if any method is used, it is possible to determine projected image of red frame in the "key extracted picture".

Then, projection transform is implemented so as to just fall within frame $21_1$ of red within the "key extracted picture" with respect to "plate on which content of news, etc. is written" prepared by CG. The projected image (CG flip picture) of the plate of CG to which this projection transform is implemented is synthesized with "key extracted picture". Position where projected image of plate of CG is synthesized is the removed portion in the "key extracted picture". In other words, "CG flip picture" is first prepared to overwrite "key extracted picture" thereon. Thus, the projected image left of the projected image of plate of CG is only the projected image positioned at the nothing or null portion 19 within "key extracted picture". Namely, there is no possibility that projected image 16 of performer and projected image $21_1$ of red frame are overwritten by "CG flip picture". In this way, "CG flip picture" is synthesized with "key extracted picture". This synthetic picture is called first synthetic picture at time T3.

Also in the first synthetic picture obtained by synthesizing "CG flip picture" with "key extracted picture", portion which is still nothing or null exists. Then, projected image of "white wall" which is the background prepared by CG is synthesized with this portion. As previously described, "white wall" virtually exists at position of z=10 with the world coordinate system being as reference.

In the first synthetic picture at time T3, picture 20 of "CG background picture" at time T3 is inserted into the nothing or null portion. This picture is called second synthetic picture. As shown in FIG. 19C, the second synthetic picture is a picture as if performer and red frame attached "plate on which content of news, etc. is written" exist in the state where white wall is caused to be background. Namely, projected image 16 of performer is imaged on "white wall" 20 at the second synthetic picture along with "plate on which content (A) of news, etc. is written" present at the inside 22 of the projected image $21_1$ of the red frame.

At time T4 shown in FIG. 20, the same three-dimensional area (W) 15 as that of FIG. 18 is selected by the director. Similarly to that at times until now, the same transform as that of position and direction (rotational transform R, translational transform T) of the stereo camera 1 at time T4 with respect to the world coordinate system is carried out with respect to the three-dimensional area W to obtain three-dimensional area V.

Moreover, at time t4, the performer 10 approaches plate 20. In this case, since the plate 20 is actually existing plate, it is easy that the performer approaches that plate. Hitherto, since virtual plate is present at the portion where no object exists and performer approaches it, performer was very difficult to carry out performance.

In the original picture shown in FIG. 21A at time t4, since performer 10 approaches plate 20 in FIG. 20, projected image 16 of performer partially overlaps with projected image $21_1$ of plate frame. Since performer is present in front of the plate, a portion of projected image $21_1$ of plate frame is not imaged.

In the original picture shown in FIG. 21A, the portion of blue (and blue system) is (are) removed. Further, object in which that position is not included within the three-dimensional area V is removed. Thus, background 17 (including marker portion) shown in FIG. 21A and projected image 21 of plate except for frame are deleted. Further, projected image 16 of performer and projected image $21_1$ of frame of plate are left in this work. The picture after such removing work is "key extracted picture" shown in FIG. 21B.

Even at this time, synthesis of projected image of "plate on which content of news, etc. is written" prepared by CG is carried out. To realize this, the portion of frame of red is searched by using the same method as the previously described method. As seen from the original picture shown in FIG. 21A, one side of red frame is concealed by performer. However, its one side can be estimated from remaining three sides.

Then, projection transform is implemented so as to just fall within the frame of red within "key extracted picture" with respect to "plate on which content of news, etc. is written" prepared by CG. The projected image of plate of CG (CG flip picture) to which such projection transform has been implemented is synthesized with "key extracted picture". The position where projected image of plate of the CG is synthesized is only the removed portion in the "key extracted picture". Namely, there is no possibility that projected image 16 of performer and projected image $21_1$ of red frame are overwritten by "CG flip picture". This synthetic picture is called first synthetic picture at time T4.

Also in the first synthetic picture in which "CG flip picture" is synthesized with "key extracted picture", portion which is still nothing or null exists. Then, projected image of "white wall" which is background prepared by CG is synthesized with this portion. The projected image of "white wall" to be synthesized (CG background picture) is picture when viewed from virtual position similarly to that at times until now, and its explanation is omitted. The picture into which picture of "CG background picture" is inserted into the nothing or null portion in the first synthetic picture at time T4 is second synthetic picture shown in FIG. 21. This picture results in a picture as if performer and red frame attached "plate on which content of news, etc. is written" exist with the white wall being as background. In addition, performer is such a picture present in the vicinity of the plate.

At time T5 shown in FIG. 22, the same three-dimensional area (W) 15 as that of FIG. 20 is selected. Similarly to times until now, the same transform as that of the position and the direction (rotational transform R, translational transform T) of the stereo camera 1 at time T5 with respect to the world coordinate is carried out with respect to the area W to obtain three-dimensional area V.

Moreover, at the time T5, the performer 10 protrudes arm 23 as shown in FIG. 22 to describe graphic by pen toward the plate 20. In this case, the content to be written is drafted (caused to undergo rough copy) by blue system on the plate 20. Namely, since it is sufficient that the performer 10 carries out describe operation by pen along the rough copy, it is possible to easily describe the content. As color of characteristic or graphic written by pen, color which is not blue system is used.

Since the performer 10 writes graphic by pen on the plate 20, projected image 24 of arm of performer exists within original picture shown in FIG. 23A at time T5. Further, since the rough copy portion $21_2$ is written by the pen, it disappears, and projected image 25 of graphic written by pen can be seen in place thereof. In this connection, the rough copy portion $21_2$ and projected image 25 of graphic are the same shape. The reason thereof is that the performer traces the rough copy portion by pen.

In the original picture shown in FIG. 23A, the portion of blue (and blue system) is (are) removed. Further, object in which its position is not included within the three-dimensional area V is removed. Thus, background shown in FIG. 23A (including marker portion) and plate except for frame are deleted. Further, projected images 16, 24 of performer (including arm), projected image $21_1$ of frame of plate and projected image 25 of graphic written by pen which is not blue are left in this work. The picture after removing work is "key extracted picture" shown in FIG. 23B.

Even at this time point, synthesis of projected image of "plate on which content of news, etc. is written" prepared by CG is carried out. To realize this, the portion of the frame of red is searched by using the same method as the previously described method. As seen from the original picture shown in FIG. 23A, one side of red frame is concealed by performer. However, that one side can be estimated from other three sides.

Then, projection transform is implemented to "plate on which content of news, etc. is written" prepared by CG so as to just fall within the red frame within the "key extracted picture". The projected image of plate of the CG (CG flip picture) to which this projection transform has been implemented is synthesized with "key extracted picture". The position where projected image of plate of the CG is synthesized is only the removed portion in the "key extracted picture". Namely, there is no possibility that projected images 16 and 24 of performer (including arm), projected image $21_1$ of red frame and projected image 25 of graphic written by pen are overwritten by the "CG flip picture". This synthetic picture is called first synthetic picture at time T5.

Also in the first synthetic picture obtained by synthesizing "CG flip picture" with "key extracted picture", portion which is not still nothing or null exists. Then, projected image of "white wall" which is background prepared by CG is synthesized with this portion. Projected image of "white wall" to be synthesized (CG background picture) 20 is picture viewed from virtual position similarly to that at times until now and its explanation is omitted. The picture into which picture 20 of "CG background picture" is inserted into the nothing or null portion in the first synthetic picture at time T5 is second synthetic picture. This picture is a picture as if performer and red frame attached "plate on which content of news, etc. is written" exist in the state where the white wall is caused to be background. Further, this picture is picture in which graphic that performer writes is written. In this case, ◯ is written by pen so as to surround character of A on the plate of CG.

At time T6, performer is also moved to the right end. Since the explanation at this time is substantially the same as explanation at time T3, its explanation is omitted. It is to be noted that the point different from T3 is that performer 10 writes graphic by pen on the actual plate 20. Accordingly, in the original picture at time T6 shown in FIG. 25A, there is graphic 25 in place of rough copy portion $21_2$ in FIG. 19A. In addition, since this graphic 25 is not removed in key extraction, it appears also at key extracted picture shown in FIG. 25B and second synthetic picture shown in FIG. 25C.

The second synthetic picture shown in FIG. 25C results in a picture as if performer and red frame attached "plate on which content of news, etc. is written" exist with white wall being as background. Further, this picture is picture in which graphic 25 that performer writes is written on that plate.

Since the explanation at time T7 is substantially the same as the explanation at time T2, its explanation is omitted. It is to be noted that the point different from time T2 is that performer writes graphic by pen on actual plate 20. However, since the plate 20 is not included within the three-dimensional area V, projected image 25 of graphic is removed along with projected image $21_1$ of red frame of plate in key extraction. Moreover, actually existing plate 20 is carried through the passage except for area (W) 15 shown in FIG. 26. Accordingly, in the original picture at time T7 shown in FIG. 27A, projected image 21 of plate is caused to undergo frame out in such a manner that the projected image 21 is gone out toward the outside of picture. In the original picture at time T7 shown in FIG. 27A, there is graphic 25 in place of rough copy portion 212 shown in FIG. 27A. In addition, since graphic 25 is removed in key extraction, it does not appear on key extracted picture shown in FIG. 27B, and second synthetic picture shown in FIG. 27C.

The second synthetic picture shown in FIG. 27C is a picture as if performer exists with white wall being as background.

Further, although illustration is omitted, new plate is carried similarly to that at time T2 after that. Thus, performer can write graphic or character by pen onto new plate. In addition, it is possible to prepare synthetic picture as if graphic or character is written on "plate on which content of news, etc. is written" prepared by CG.

As stated above, in the picture processing apparatus of this embodiment, since the portion of blue is removed and area except for three-dimensional area that the director designates is also removed, marker of background can be removed in key extraction even if marker of blue system is not employed. Accordingly, color of marker is caused to be conspicuous color, whereby recognition of that projected image becomes easy when it is photographed by the camera.

Further, by the feature of this invention that the three-dimensional area that the director designates can be adjustably set with time, the following merits are provided.

At the process of caring-in or carrying-out of actual plate for assisting play (performance) of performer, etc., setting is made so as not to include that plate into the area to thereby remove the plate in key extraction. In such a state, when the performer approaches the plate, as far as performer is removed in key extraction. In this case, the director sets, for a second time, the area so as to include the plate before he approaches the plate, it is possible to avoid it.

Further, the performer writes characters, etc. onto that plate, thereby making it possible to write it as if it is written onto the plate prepared by CG.

While the background, etc. is caused to be blue and the blue portion is removed in key extraction in the above-mentioned explanation, it is a matter of course that color except for blue, e.g., green, etc. may be employed. In addition, e.g., color from which key is extracted may be caused to be red and the background may be caused to be red.

Since the picture processing method and the picture processing apparatus according to this invention are adapted to take out only projected image imaged on the three-dimensional area designated by the world coordinate system by user, when the above-mentioned three-dimensional area is designated so as not to first include actual plate to which mark such as red frame is attached, even if other picture is synthesized so as to cover actual plate with reference to the mark, the area is re-designated so as to include actual plate, thereby permitting performer to carry out play (performance) while designating actual plate. Thus, performance is facilitated.

In addition, since the picture processing panel according to this invention is of the structure in which rough copy is carried out so that the character or the graphic is written by the same color as specific color of the background or color similar to specific color on the surface, play (performance) of performer can be facilitated

It is to be noted that various modifications or applied examples are conceivable within the range which does not depart from the gist of this invention. Accordingly, the gist of this invention is not limited to the embodiment

## Claims

1. A picture processing method for synthesizing at least two pictures, comprising:

   receiving an original picture from a main camera;

   removing only portion of a specific color area from the original picture;

   taking out only an object located at three-dimensional position included in a designated three-dimensional area of three-dimensional position of the object projected onto the original picture; and

   synthesizing other picture with the picture thus taken out to output it.

2. A picture processing method as set forth in claim 1,
   wherein the three-dimensional position of the object is determined by position on screen of projected image of the object imaged by plural imaging units.

3. A picture processing method as set forth in claim 1,
   wherein the specific color is blue or green.

4. A picture processing method as set forth in claim 1,
   wherein the three-dimensional area is adjustably designated.

5. A picture processing method as set forth in claim 4,
   wherein the three-dimensional area is adjustably designated with time.

6. A picture processing apparatus adapted for synthesizing at least two pictures, the apparatus comprising:

a receiving unit for receiving an original picture from a main camera; and

an arithmetic unit for removing only portion of a specific color area from the original picture to further determine picture obtained by taking out only object located at three-dimensional position included within a designated three-dimensional area of the three-dimensional position of the object projected onto the original picture to synthesize other picture with this picture.

7. A picture processing apparatus as set forth in claim 6,
   wherein the three-dimensional position of the object is determined by position on the screen of the projected image of the object imaged by plural imaging units.

8. A picture processing apparatus as set forth in claim 6,
   wherein the specific color is blue or green.

9. A picture processing apparatus as set forth in claim 6,
   wherein the three-dimensional area is adjustably designated.

10. A picture processing apparatus as set forth in claim 9,
    wherein the three-dimensional area is adjustably designated with time.

11. A picture processing panel used for picture processing adapted for removing portion of a specific color area from an original picture imaged by an imaging unit to further synthesize characters or graphics in the state where positions on the three-dimension are caused to be in correspondence with each other to output them,
    wherein rough copy is implemented by color within color region removed from the original picture and visual color so that the characters or the graphics are written on the surface.

12. A recording medium adapted so that there is recorded a processing procedure including

    a step of removing only portion of a specific color area from an original picture,
    a step of taking out only object located at three-dimensional position included within the designated three-dimensional area of the three-dimensional position of the object projected on the original picture, and
    a step of synthesizing other picture with picture in which only object located at three-dimensional position included within the three-dimensional area is taken out.

13. A recording medium as set forth in claim 12,
    wherein the three-dimensional area is adjustably designated.

FIG.1

y-AXIS

x-AXIS

ORIGIN

106

z-AXIS

105

104

103

SLIDING DIRECTION

102

101

**FIG.2**

**FIG.3**

**FIG.4**

FIG.5

**FIG.6**

EP 0 923 235 A1

126

Y-AXIS

Z-AXIS

129

X-AXIS

ORIGIN

128

Y-AXIS

127

Z-AXIS

X-AXIS

ORIGIN

R, T

# FIG.7

EP 0 923 235 A1

131
PERFORMER

130 STUDIO ↑ DIRECTION OF CAMERA

# FIG.8A

131

130

# FIG.8B

131

130

# FIG.8C

131

132

130

# FIG.8D

FIG.9A

FIG.9B

FIG.9C

FIG.9D

**FIG.10A**

131

130

**FIG.10B**

137

131

130

**FIG.10C**

137

131

130

**FIG.10D**

137

131

132

130

EP 0 923 235 A1

**FIG.11**

```
                    ┌─────────────┐
                    │    START    │
                    └─────────────┘
                           │
                           ▼
S1 ┌──────────────────────────────────────────────┐
   │ THREE-DIMENSIONAL AREA W AT WORLD COORIDINATE │
   │      SYSTEM IS DESIGNATED FROM INPUT UNIT      │
   └──────────────────────────────────────────────┘
                           │
                           ▼
S2 ┌──────────────────────────────────────────────┐
   │   CALCULATION OF POSITION ON THREE-DIMENSION   │
   │      OF MARKER LOCATED ON BACKGROUND           │
   └──────────────────────────────────────────────┘
                           │
                           ▼
S3 ┌──────────────────────────────────────────────┐
   │  DETERMINATION OF POSITION/DIRECTION OF STEREO │
   │    CAMERA FROM MARKER POSITION INFORMATION     │
   │      VIEWED FROM WORLD COORDINATE SYSTEM       │
   └──────────────────────────────────────────────┘
                           │
                           ▼
S4 ┌──────────────────────────────────────────────┐
   │ CALCULATION OF THREE-DIMENSIONAL AREA V IN WHICH│
   │ ROTATIONAL TRANSFORM & TRANSLATIONAL TRANSFORM │
   │ ARE CARRIED OUT WITH RESPECT TO THREE-DIMENSIONAL│
   │      AREA W AT WORLD COORDINATE SYSTEM         │
   └──────────────────────────────────────────────┘
                           │
                           ▼
S5 ┌──────────────────────────────────────────────┐
   │  REMOVAL OF PORTION OF BLUE FROM ORIGINAL PICTURE│
   └──────────────────────────────────────────────┘
                           │
                           ▼
S6 ┌──────────────────────────────────────────────┐
   │  CALCULATION OF POSITION ON THREE-DIMENSION OF │
   │  OBJECT CORRESPONDING TO ALL PROJECTED IMAGES  │
   └──────────────────────────────────────────────┘
                           │
                           ▼
S7 ┌──────────────────────────────────────────────┐
   │     ONLY PROJECTED IMAGE CORRESPONDING TO      │
   │   OBJECT WITHIN THREE-DIMENSIONAL AREA V IS     │
   │        LEFT TO REMOVE OTHER PORTION            │
   └──────────────────────────────────────────────┘
                           │
                           ▼
S8 ┌──────────────────────────────────────────────┐
   │   DETECTION OF PATTERN REGISTERED IN ADVANCE   │
   └──────────────────────────────────────────────┘
                           │
                           ▼
S9 ┌──────────────────────────────────────────────┐
   │  "CG FLIP PICTURE" IS SYNTHESIZED WITH DELETED │
   │   PORTION WITHIN "KEY EXTRACTED PICTURE" TO     │
   │       PREPARE 1-ST SYNTHETIC PICTURE           │
   └──────────────────────────────────────────────┘
                           │
                           ▼
10 ┌──────────────────────────────────────────────┐
   │ "CG BACKGROUND PICTURE" IS SYNTHESIZED WITH 1-ST│
   │ SYNTHETIC PICTURE TO PREPARE 2-ND SYSTHETIC PICTURE│
   └──────────────────────────────────────────────┘
                           │
                           ▼
11 ┌──────────────────────────────────────────────┐
   │      OUTPUT OF 2-ND SYNTHETIC PICTURE          │
   └──────────────────────────────────────────────┘
                           │
                           ▼
                    ┌─────────────┐
                    │     END     │
                    └─────────────┘
```

# FIG.12

**FIG.13**

EP 0 923 235 A1

**FIG.14**

**FIG.15A**

**FIG.15B**

(NOTHING)

**FIG.15C**

**FIG.16**

**FIG.17A**

(NOTHING)

**FIG.17B**

**FIG.17C**

**FIG.18**

**FIG.19A**

**FIG.19B**

**FIG.19C**

**FIG.20**

**FIG.21A**

**FIG.21B**

**FIG.21C**

**FIG.22**

**FIG.23A**

**FIG.23B**

**FIG.23C**

**FIG.24**

**FIG.25A**

**FIG.25B**

**FIG.25C**

**FIG.26**

**FIG.27A**

(NOTHING)

**FIG.27B**

**FIG.27C**

## INTERNATIONAL SEARCH REPORT

| International application No. |
|---|
| PCT/JP98/02307 |

| A. CLASSIFICATION OF SUBJECT MATTER |
|---|
| Int.Cl⁶ H04N5/262, H04N9/75, G06T1/00 |

According to International Patent Classification (IPC) or to both national classification and IPC

| B. FIELDS SEARCHED |
|---|
| Minimum documentation searched (classification system followed by classification symbols) |
| Int.Cl⁶ H04N5/262-5/28, H04N9/75 |

| Documentation searched other than minimum documentation to the extent that such documents are included in the fields searched |
|---|
| Jitsuyo Shinan Koho        1926-1998 |
| Kokai Jitsuyo Shinan Koho   1971-1998 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP, 09-224259, A (Sanyo Electric Co., Ltd.), 26 August, 1997 (26. 08. 97) (Family: none) | 1-13 |
| A | JP, 57-093788, A (Nippon Hoso Kyokai), 10 June, 1982 (10. 06. 82) (Family: none) | 1-13 |
| A | JP, 61-111276, U (Tokyo Broadcasting System, Inc.), 14 July, 1986 (14. 07. 86) (Family: none) | 1-13 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 18 August, 1998 (18. 08. 98) | 1 September, 1998 (01. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)